# EUROPEAN PATENT APPLICATION

(11) **EP 2 249 269 A1**
(43) Date of publication of application: **10.11.2010**
(21) Application number: 09712933.2
(22) Date of filing: 16.02.2009
(51) Int. Cl.: G06F 17/50, G06T 15/70

(54) **DRESSING SIMULATION DEVICE, SIMULATION PROGRAM AND METHOD FOR SIMULATION**

(30) Priority: 18.02.2008 JP 2008035731
(71) Applicant: Shima Seiki Manufacturing., Ltd., Wakayama-shi Wakayama 641-0003 (JP)
(72) Inventor: MORIMOTO, Shinji, Wakayama-shi Wakayama 641-0003 (JP); NAKAMURA, Toshinori, Wakayama-shi Wakayama 641-0003 (JP)
(74) Representative: Tomlinson, Kerry John
(86) International application number: PCT/JP2009/053116
(87) International publication number: WO 2009/104777

(57) **Abstract**

A plurality of mass points are generated on a designed virtual garment and stable conditions of the plurality of mass points are simulated by elastic force acting between the mass points and force acting between a human body model and each of the mass points. A result of the simulation is displayed on a display unit (6) and, when the design is changed, a distance at which the elastic force becomes zero is changed so that a re-simulation of the stable conditions of the mass points is carried out. Thus, even if the design of the garment is changed, a real time and precise simulation can be carried out.

## Description

The present invention relates to a dressing simulation, and particularly to the increased speed of a simulation performed when the size of a garment is changed.

A simulation of a state in which a human body is dressed with a garment made of a knitted product or a woven product has been investigated. A garment has a variety of sizes and variations in terms of its design. In addition to making a design that fits on a standard body shape, correction of the design is performed so that the design is fit on an actual body shape of a client. It is not rational to start over the simulation again to deal with such processes.

In terms of changing the design after carrying out the first simulation, Patent Document 1: Japanese Patent Application Publication No. 2000-242683 proposes a method for approximately obtaining a dressing state of a new design without starting over the simulation. In Patent Document 1, points are specified on a garment when changing the design thereof and then moved in accordance with the new design. Peripheral sections of the garment are also moved in a similar manner.

However, simply reducing or enlarging the garment other than making simple changes on the design, such as placing pockets or changing the shape of the collar, is not sufficient to perform a realistic simulation. For example, when the bodies of the garment are excessively thin for a human body model, the bodies become tightly attached to the human body model and form uncomfortable shapes. When specifying several points to form the outlines of new bodies and homologously deforming these outlines, the bodies are not tightly attached to the human body model but still form uncomfortable shapes. On the other hand, when the bodies are excessively large for the human body model, the bodies separate from the human body model and become saggy, generating ill-fitting sections. When the size of the garment is reduced while keeping its shape similar to the original shape, the bodies themselves become small but the ill-fitting sections remain as they are.

Patent Document 1: Japanese Patent Application Publication No. 2000-242683

An object of the present invention is to be able to perform a high-speed, realistic simulation when changing the size of a garment.

The present invention is a dressing simulation device, which generates a plurality of mass points on a designed virtual garment and simulates stable conditions of the plurality of mass points by means of elastic force acting between the mass points and force acting between a human body model and each of the mass points, the dressing simulation device characterized by including:
a user interface that receives a change of a design while displaying a simulation result on a display unit; and
re-simulation means for changing a distance at which the elastic force becomes zero, in accordance with the changed design, and re-simulates the stable conditions of the plurality of mass points from the simulation result.

A dressing simulation program according to the present invention is a dressing simulation program, which generates a plurality of mass points on a designed virtual garment and simulates stable conditions of the plurality of mass points by means of elastic force acting between the mass points and force acting between a human body model and each of the mass points, **characterized in that** the dressing simulation program causes a dressing simulation device to execute:
a step of receiving a change of a design while displaying a simulation result on a display unit; and
a re-simulation step of changing a distance at which the elastic force becomes zero, in accordance with the changed design, and re-simulating the stable conditions of the plurality of mass points from the simulation result.

The dressing simulation method according to the present invention is a dressing simulation method for generating a plurality of mass points on a designed virtual garment and simulating stable conditions of the plurality of mass points by means of elastic force acting between the mass points and force acting between a human body model and each of the mass points, the dressing simulation method characterized by including the steps of:
receiving a change of a design made by a user, while displaying a simulation result on a display unit; and
changing a distance at which the elastic force becomes zero, in accordance with the changed design, and re-simulating the stable conditions of the plurality of mass points from the simulation result.

It is preferred that the user interface display a changed section of the garment and a current size of the garment at the changed section, along a position and direction specified by the user, and change the sizes of parts including the changed section, in accordance with a new size input by the user, and that the re-simulation means change the distance at which the elastic force becomes zero, in accordance with the changed sizes.

It is more preferred that the dressing simulation device characterized by further including means for outputting design data of the garment according to the changed sizes of the parts.

Moreover, it is preferred that the user interface superimpose and display a distribution of the elastic force on an image showing the simulation result.

It is also preferred that the user interface superimpose and display a distribution of a distance between each mass point and the human body model on an image showing the simulation result.

Preferably, the re-simulation means starts a re-simulation from a state in which the distance at which the elastic force becomes zero is changed, while keeping the position of each mass point in the simulation result.

It is also preferred that the re-simulation means change the position of each mass point in the simulation result in accordance with the changed design, and start a re-simulation from a state in which the distance at which the elastic force becomes zero is changed.

In this specification, the descriptions of the simulation device apply directly to the simulation program and the simulation method, and the descriptions of the simulation program apply directly to the simulation device and the simulation method.

According to the present invention, when the design is changed, the simulation is carried out again based on the simulation result obtained before changing the design. Therefore, the simulation can be performed much faster than when the simulation is started over again. Furthermore, because new design data is used for carrying out the simulation without homologously deforming the original simulation results, the simulation can be performed again with consideration of the interface between the garment and the human body model. For this reason, high-speed, accurate re-simulation can be accomplished.

Here, when a change section of the garment and a current size of the garment at the change section are displayed along a position and direction specified by the user, and the sizes of parts including the changed section are changed in accordance with a new size input by the user, how the sizes of the parts are changed can be specified easily.

When the design data of the garment is output according to the changed sizes of the parts, the design data of the garment can be changed according to the changes of the sizes.

Moreover, when a distribution of the elastic force is superimposed and displayed on the image showing the simulation result, the sections on the garment that are deformed by the interference with the human body model can be observed, and thereby wear comfort of the garment can be evaluated. For this reason, the design can be changed easily.

Even when a distribution of the distance between each mass point and the human body model is superimposed and displayed on the image showing the simulation result, the sections on the garment that are attached tightly to the human body model can be observed, and thereby the wear comfort can be similarly evaluated.

When the re-simulation means starts the re-simulation after changing the distance at which the elastic force becomes zero, while keeping the positions of the mass points in the simulation result, the simulation can be started while a large force acts on each mass point. Consequently, the garment deforms significantly during the re-simulation and thus is prevented from being immobile due to a friction with the human body model, and drapes and the like also change from the original states thereof to new states. Because the mass points are operated on by a large force, the mass points become stabilized into new states through a relatively small number of steps, and, as a result, the simulation time can be relatively reduced. For this reason, the dressing state that is significantly changed from the first simulation result can be simulated in a relatively short amount of time.

On the other hand, when the positions of the mass points in the simulation result are changed according to the changed design and then the re-simulation is started after the distance where the elastic force becomes zero is changed, new stable conditions can be obtained by a very small number of steps in the case where the changes of the sizes are small. Thus, a new dressing state can be simulated in a short amount of time.
Fig. 1 is a block diagram of a dressing simulation device according to an embodiment;
Fig. 2 is a diagram showing a simulation algorithm according to the embodiment;
Fig. 3 is a diagram showing a simulation result obtained before changing sizes according to the embodiment;
Fig. 4 is a diagram showing a size change input screen according to the embodiment;
Fig. 5 is a diagram showing a simulation result obtained after changing the sizes according to the embodiment; and
Fig. 6 is a block diagram showing a dressing simulation program according to the embodiment.

- 2: Dressing simulation device
- 4: Bus
- 6: Display unit
- 8: Image input
- 10: Command input
- 12: Color printer
- 14: Network interface
- 16: Memory
- 18: Program memory
- 20: Size change input interface
- 24: Knit design unit
- 26: Data converter
- 28: Image memory
- 30: Simulator
- 31: Mass point generating unit
- 32: Dynamic calculation unit
- 33: Polygon generating unit
- 34: Rendering unit
- 40: Cut surface
- 60: Dressing simulation program
- 61: Mass point generation instruction
- 62: Dynamic calculation instruction
- 63: Polygon generation instruction
- 64: Rendering instruction
- 65: Size change assistance instruction
- 66: Mass point relocation instruction
- 67: Strain indicating instruction

A best mode for carrying out the present invention is described hereinafter.

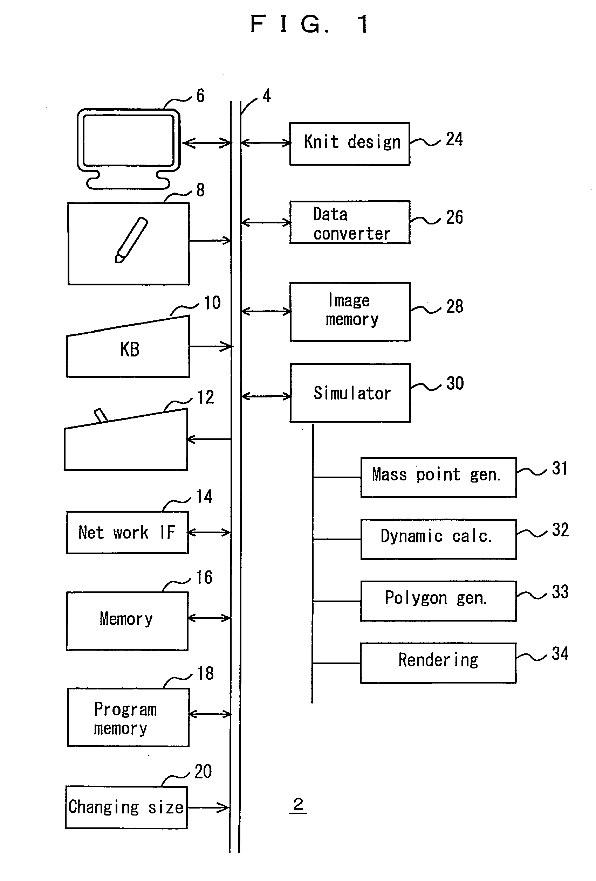

Figs. 1 to 6 show a dressing simulation device 2 and dressing simulation program 60 of an embodiment. In Fig. 1, reference numeral 4 represents a bus, 6 a color display unit, 8 an image input, which is a stylus here but may be a mouse, a joystick, a trackball or the like. Reference numeral 10 represents a command input, which is, for example, a keyboard. Reference numeral 12 represents design data and a color printer displaying a simulation image and the like. Reference numeral 14 is a network interface, 16 a general memory, and 18 a program memory for storing a simulation program and the like. The dressing simulation device 2 is an information processing device, which is configured by a computer having a graphic CPU, general CPU, bus, memory and the like, and executes the dressing simulation program 60.

A size change input interface 20 is an interface used by a user to change sizes on a simulated garment. Reference numeral 24 is a knit design unit that designs a knit garment according to inputs from the image input 8 and the like. It should be noted that a subject to be designed may not only be the knit garment but also be a garment that uses a woven fabric. A data converter 26 converts the design of the knit into knitting data that can be knitted using a flat knitting machine. Reference numeral 28 is an image memory for storing image data such as a simulation result.

Reference numeral 30 is a simulator for simulating a state in which a human body model is dressed in the designed garment. Because the knit garment has a very large number stitches, simulating the state in units of stitches does not allow a dialogical simulation. Therefore, mass points representing approximately 10 to 1000 stitches are provided to perform the simulation based on the mass points. When generating the mass points, for example, a virtual garment corresponding to design data is divided into a plurality of sections by using meshes or the like, and the mass points are provided in, for example, the points where the meshes intersect with each other. In the case of a garment configured by a woven fabric as well, a plurality of mass points are provided in each part of the garment to perform a simulation in units of mass points.

A mass point generating unit 31 generates a plurality of mass points on a virtual garment. Those mass points that are close to each other are joined to each other by elastic force. The elastic force may include sections other than primary sections. The garment is relaxed when the mass points are generated, and a model is used in which the elastic force becomes zero at a distance between the mass points at this time and the elastic force acts whether the garment is compressed or stretched. The mass of the garment is distributed to the mass points, and friction with a human body model acts on each mass point due to a friction coefficient corresponding to the material of the garment. The task of the mass point generating unit 31 is to replace design data by a model that can be subjected to a dynamic simulation, and the elements of the model are the mass points.

A dynamic calculation unit 32 computes the dressing state of a human body model, for the model of the garment expressed by the mass points. The shape of the human body model is stored in the memory 16 and the like, and the dynamic calculation unit 32 computes the force acting on each mass point, and a motion of each mass point is simulated. The acting force includes the elastic force changed by the distance between the mass points, gravitational force, and frictional force between the garment and the human body model. The simulation is repeated until the position of each mass point becomes stable. When a placement of the mass points is determined three-dimensionally, a polygon generating unit 33 generates display polygons based on the positions of the mass points. When, for example, it is not necessary to express individual yarns, the polygon generating unit 33 generates a plurality of polygons so as to cover the surface of the garment. When the yarns need to be expressed, the surfaces of the yarns are expressed by the polygons. In the case of a knit garment, for example, placement of stitches is determined based on the placement of the mass points and the yarns are placed in relation to the stitches to generate the polygons on the surfaces of the yarns. A rendering unit 34 maps the texture onto the surfaces of the generated polygons, performs shading thereon, and displays a rendered image as a simulation result on the display unit.

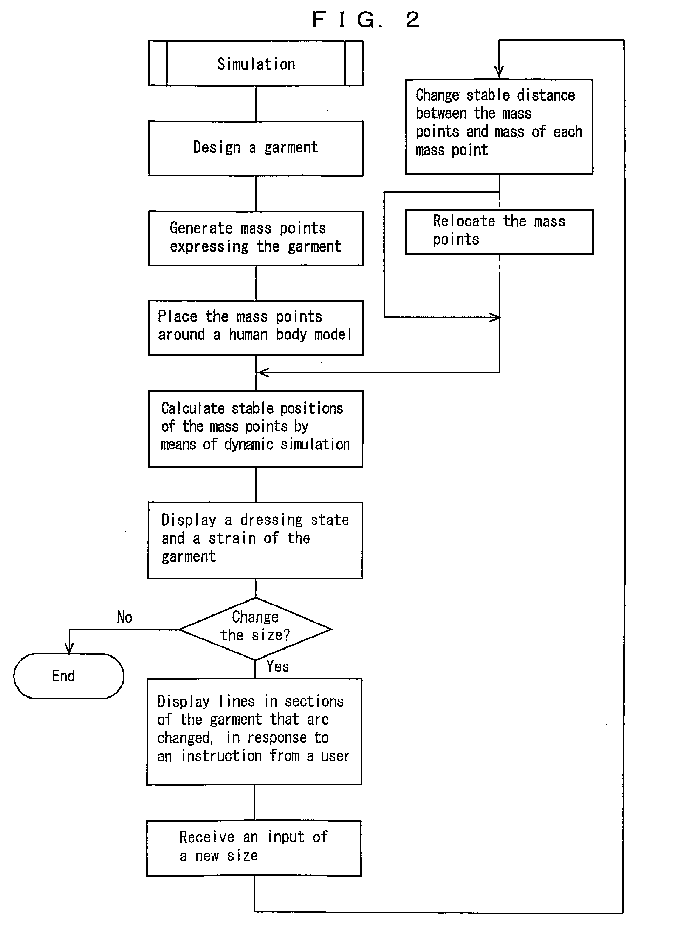

Fig. 2 shows a simulation algorithm according to the embodiment. The garment such as the knit garment is designed, and the mass points expressing the garment are generated by the mass point generating unit. Then, the mass points are placed around the human body model. In other words, the human body model is dressed in the virtual garment. Stable positions of the mass points are calculated by the dynamic simulation, then the polygons are generated and rendered, and a dressing state is displayed on the display unit 6.

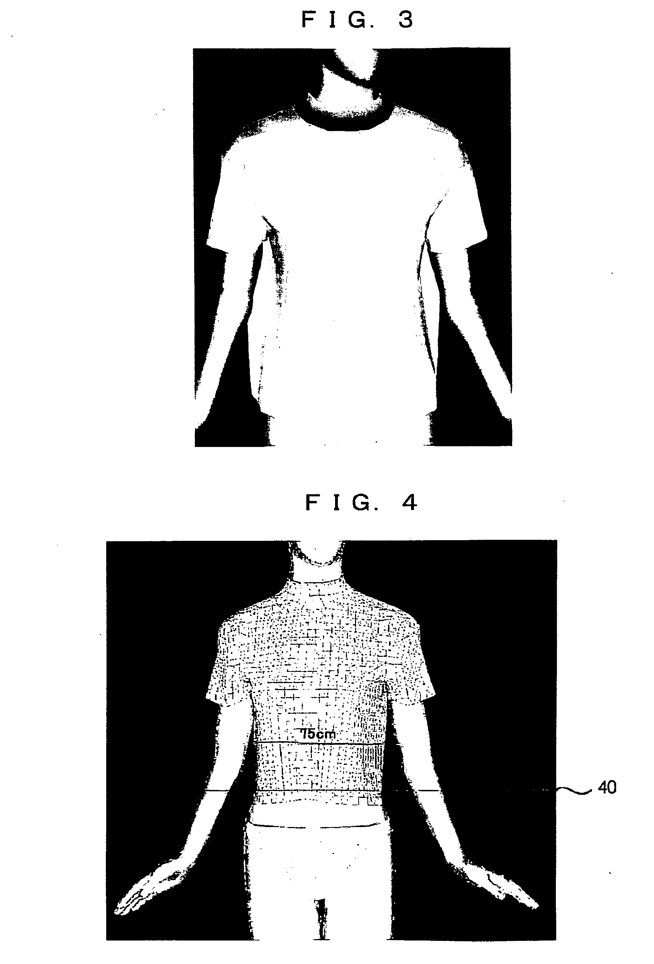

Fig. 3 shows an example of the simulation result. A garment to be designed consists of a total of six parts that are obtained by dividing bodies, the right sleeve, and the left sleeve into two parts, front and rear parts. There are rules such that the front body and the rear body have the same height and width and that the left and right sleeves are symmetric. A distribution of the elastic force acting on the mass points is superimposed and displayed on the image of the garment. Because the distance between the mass points is calculated by the simulation and the elastic force is defined by the distance, the elastic force acting on the mass points can also be calculated easily. An area with large elastic force is where the garment deforms significantly by dressing the human body in the garment. Such deformation is caused by interference between the garment and the human body model. The distribution of the elastic force indicates a distribution of a strain, and an area showing uncomfortable wear is observed by displaying the distribution of the elastic force.

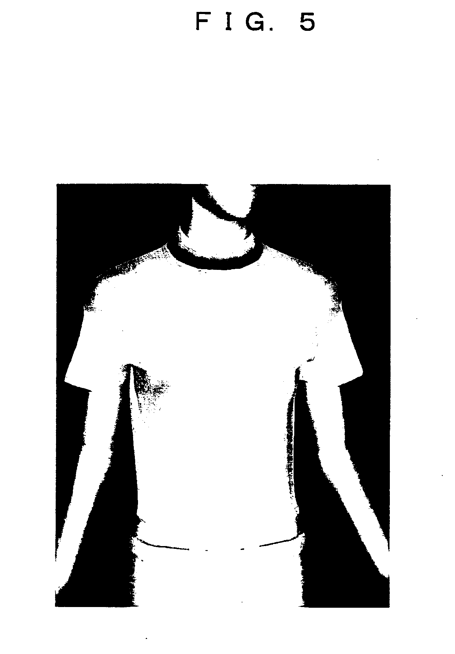

It should be noted that Fig. 3 and Fig. 5 described hereinafter display, in grayscale, the distribution of the elastic force within the garment and shade formed by 3D display, causing a contusion. The distribution of the elastic force is such that the maximum elastic force acts on a neckline, the second greatest elastic force acts on a shoulder line, and weak elastic force acts on the periphery of an arm hole. No elastic force acts on the shade of an armpit, because a shadow is formed in this section. It is understood from Fig. 3 that the size of the designed garment is very loose-fitting.

Although not shown in Fig. 3, a distribution of the distance between each mass point and the human body model may be superimposed and displayed on the simulation image. A section in which the distance is short is where the garment and the human body model are attached tightly to each other, and a section in which the distance is long is where the garment and the human body model are separated from each other. Based on these, the wear comfort of the garment can be evaluated.

An input for changing the size is received from the user. Changing the size means to change the height or the width of each part. For a cylindrical part, the circumferential length thereof is obtained by doubling the width. Fig. 4 shows an example of the input for changing the size. When the user specifies a position to change the size and a direction of the change on the simulation image, a cut surface 40 and, for example, the current size are displayed, as shown in Fig. 4. This input shows that the circumferential lengths of the bodies are changed at the level of the cut surface 40. Whether the data to be changed is the circumferential length or the height is specified by, for example, tracing the image based on the image input along the direction for changing the size, or by specifying the direction for changing the size by means of the keyboard. Once the position and direction of the change section are specified, the size change input interface 20 indicates the current size in the change section. This size can be expressed in an appropriate unit, in place of units such as centimeter. Note that Fig. 4 shows an example of a size change input and a garment different from that shown in Fig. 3.

The user inputs a new size from the keyboard or the image input. As a result, the sizes such as the circumferential length and the height are defined after the change. In Fig. 4, the circumferential length of each body is changed at one level, thereby changing the widths of the front body and the rear body, and the width of each body is changed at a level other than the specified level. Once the size is changed, new design data is created by the knit design unit and then output when, for example, the user determines that the simulation result is good. In the case of a design that can be expressed using a pattern paper, new pattern paper design is output.

Fig. 5 shows a simulation result obtained when the human body is dressed in the garment after changing the size thereof. In this example, the circumferential length of each body is reduced, the allowance of each armpit is removed, and the height is reduced, from the condition shown in Fig. 3. When the number of mass points is increased or reduced in response to the change of the size, the simulation time increases. Therefore, by regularly adding or deleting the mass points so as to change the size by, for example, ±20%, the number of mass points does not change, except that the simulation can be performed. Instead of changing the number of mass points, a stable distance between the mass points is changed in response to the change of the size. When accurately simulating the effects of the gravitational force, the mass of each mass point is changed in response to the change of the size, and when the material is also changed the coefficient of friction with the human body model may be changed. Next, the dynamic simulation is carried out again based on the previous simulation result, e.g., the simulation data shown in Fig. 3. The range for changing the arrangement of the mass points by the simulation may be restricted in accordance with the degree of the change of the size and the change sections.

An initial state during the re-simulation is investigated. When the simulation is performed again by changing only the stable distance between the mass points and the mass of each mass point without moving the positions of the mass points from the positions obtained in the previous simulation result, the garment drastically enters a stable condition from a condition where it is very saggy. In this case, because a large force is applied to the mass points initially, the garment cannot change its shape to a natural shape due to the friction with the human body model. The drapes can also shift to new drapes regardless of the drapes obtained before the change. Therefore, significant changes on the appearance can be obtained in a short simulation time. For this reason, it is preferred that the positions of the mass points in the previous simulation result be the initial positions of the mass points in the re-simulation.

When the change of the size is mild, it is not necessary to perform a full-scale simulation. Thus, the mass points are moved based on the assumption that the garment is homologously deformed three-dimensionally according to the change of the size. When the stable distance between the mass points and the mass of each mass point are changed from this state to perform the simulation again, the stable conditions can be obtained with an extremely small number of steps.

In the example shown in Fig. 5, because the size is reduced, the garment around the chest is attached tightly to the human body model, and the allowance of each armpit is eliminated. The shades of the armpits shown in Fig. 5 are mostly shades. The garment with the changed size as shown in Fig. 5 fits the human body model well. When designing a custom-made garment, the body shape of a client is measured and converted into the human body model. Next, the existing design data is used for simulating the dressing state. The result thereof is shown in, for example, Fig. 3. From this state, the size is changed as shown in Fig. 4, and the simulation is performed again. The result shown in Fig. 5 is obtained. In this manner, the dressing state corresponding to the body shape of the client can be evaluated. Even when carrying out grading, an objective evaluation can be performed to see what size of garment fits the human body model, that is, the body shape of the client, by using a plurality of the human body models.

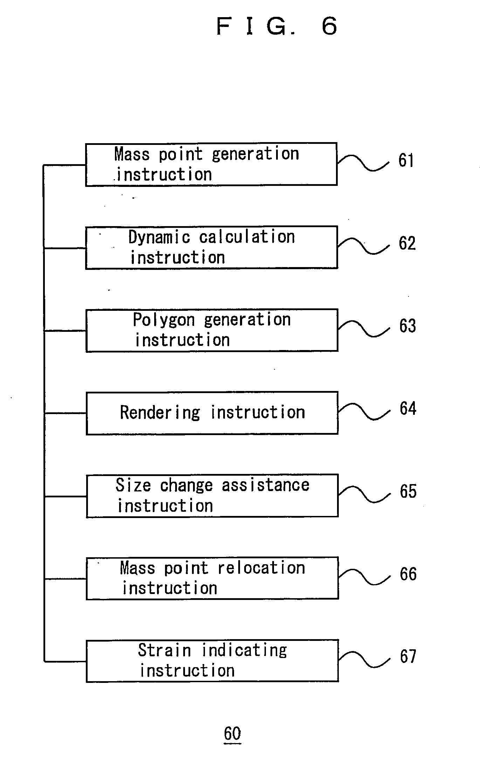

Fig. 6 shows the dressing simulation program 60 according to the embodiment. Reference numeral 61 is a mass point generation instruction to generate the mass points on the virtual garment in accordance with the design data and, at the same time, to generate the stable distance between the mass points, the elastic force between the mass points, the mass of each mass point, and the coefficient of friction between each mass point and the human body model. A dynamic calculation instruction 62 performs a dynamic calculation to simulate the stable conditions of the garment consisting of the plurality of mass points, when the human body model is dressed in the garment. A polygon generation instruction 63 generates polygons on the garment, the shape of which is defined by the mass points having stable positions, so as to cover the garment surface. A rendering instruction 64 performs rendering based on the polygons to generate a 3D image.

A size change assistance instruction 65 interprets the input that is entered by the user to change the size, and generates the design data corresponding to the changed size. A mass point relocation instruction 66 relocates the mass points in accordance with the changed size before the re-simulation, but preferably does not execute the relocation of the mass points. A strain indicating instruction 67 shows a strain of the garment by means of the elastic force acting on each mass point and the space between each mass point and the human body model.

Although the embodiment has been described with reference to a knit garment, the embodiment can be applied similarly to a garment in which a woven fabric is used. In addition to dressing the human body model in the garment, the garment may be used on an animal, a piece of furniture, or a stationary article. Moreover, outputting the design data or pattern paper data obtained after changing the size is convenient because not only simulation results but also new design data or pattern paper data can be obtained when the size is changed. In the display shown in Figs. 3 to 5, superimposing and displaying the human body model on the lower side of the garment allows easy visual understanding of how the human body model is dressed in the garment.

## Claims

1. A dressing simulation device (2) generating a plurality of mass points on a designed virtual garment and simulates stable conditions of the plurality of mass points by means of elastic force acting between the mass points and force acting between a human body model and each of the mass points, the dressing simulation device (2) **characterized by** comprising:
a user interface that receives a change of a design while displaying a simulation result on a display unit (6); and
re-simulation means for changing a distance at which the elastic force becomes zero, in accordance with the changed design, and re-simulates the stable conditions of the plurality of mass points from the simulation result.

2. The dressing simulation device (2) according to claim 1, **characterized in that**
the user interface displays a changed section of the garment and a current size of the garment at the changed section, along a position and direction specified by a user, and changes the sizes of parts including the changed section, in accordance with a new size input by the user, and **characterized in that**
the re-simulation means changes the distance at which the elastic force becomes zero, in accordance with the changed sizes.

3. The dressing simulation device (2) according to claim 2, **characterized by** further comprising means for outputting design data of the garment according to the changed sizes of the parts.

4. The dressing simulation device (2) according to claim 2, **characterized in that**
the user interface superimposes and displays a distribution of the elastic force on an image showing the simulation result.

5. The dressing simulation device (2) according to claim 2, **characterized in that**
the user interface superimposes and displays a distribution of a distance between each mass point and the human body model on an image showing the simulation result.

6. The dressing simulation device (2) according to claim 2, **characterized in that**
the re-simulation means starts a re-simulation from a state in which the distance at which the elastic force becomes zero is changed, while keeping the position of each mass point in the simulation result.

7. The dressing simulation device (2) according to claim 2, **characterized in that**
the re-simulation means changes the position of each mass point in the simulation result in accordance with the changed design, and starts a re-simulation from a state in which the distance at which the elastic force becomes zero is changed.

8. A dressing simulation program (60), which generates a plurality of mass points on a designed virtual garment and simulates stable conditions of the plurality of mass points by means of elastic force acting between the mass points and force acting between a human body model and each of the mass points, **characterized in that**
the dressing simulation program (60) causes a dressing simulation device (2) to execute:
a step of receiving a change of a design while displaying a simulation result on a display unit (6); and
a re-simulation step of changing a distance at which the elastic force becomes zero, in accordance with the changed design, and re-simulating the stable conditions of the plurality of mass points from the simulation result.

9. A dressing simulation method for generating a plurality of mass points on a designed virtual garment and simulating stable conditions of the plurality of mass points by means of elastic force acting between the mass points and force acting between a human body model and each of the mass points, the dressing simulation method **characterized by** comprising the steps of:
receiving a change of a design made by a user, while displaying a simulation result on a display unit (6); and
changing a distance at which the elastic force becomes zero, in accordance with the changed design, and re-simulating the stable conditions of the plurality of mass points from the simulation result.
